# EUROPÄISCHE PATENTSCHRIFT

(11) **EP 2 023 847 B1**
(45) Veröffentlichungstag und Bekanntmachung des Hinweises auf die Patenterteilung: **10.03.2010**
(21) Anmeldenummer: 07720163.0
(22) Anmeldetag: 24.05.2007
(51) Int. Cl.: A61C 7/10

(54) **ENORALER PALATINAL-DISTRAKTOR**
ORAL PALATAL DISTRACTOR
DISTRACTEUR PALATIN ORAL

(30) Priorität: 26.05.2006 CH 861062006
(43) Veröffentlichungstag der Anmeldung: 18.02.2009
(73) Patentinhaber: Medartis AG, 4057 Basel (CH)
(72) Erfinder: BALTENSPERGER, Marc, 8311 Brütten (CH); LEBEDA, Richard, R., CH-8704 Herrliberg (CH); BURKHART, Dominik, CH-4415 Lausen (CH); HASENBÖHLER, Alain, CH-4102 Binningen (CH); JAKUBOWITSCH, Jan, CH-4114 Hofstetten (CH); BREITENSTEIN, Michael, CH-4493 Wenslingen (CH)
(74) Vertreter: Müller, Christoph Emanuel
(86) Internationale Anmeldenummer: PCT/CH2007/000266
(87) Internationale Veröffentlichungsnummer: WO 2007/137439

(56) Entgegenhaltungen:
- EP-A2- 1 147 745
- WO-A-01/80752
- WO-A-94/10933
- US-A1- 2004 197 726

## Beschreibung

Die Erfindung betrifft einen enoralen Palatinal-Distraktor gemäss dem Oberbegriff des unabhängigen Patentanspruchs.

Enorale Palatinal-Distraktoren dienen der transversalen Oberkiefererweiterung und können beispielsweise bei maxillärer Mikrognathie (Unterentwicklung des Oberkiefers), bei unilateralem oder bilateralem Kreuzbiss, bei stark ausgeprägtem Frontzahnengstand, oder bei lückig stehenden Seitenzähnen indiziert sein. Sie sind - wie ihr Name sagt - vollständig im Mund des Patienten angebracht. Zur Oberkiefererweiterung kommt insbesondere bei erwachsenen Patienten die forcierte, chirurgisch unterstützte Gaumennahterweiterung in Betracht. Häufig kommen dabei aber noch zahngestützte Dehnapparaturen zum Einsatz. Allerdings müssen in erster Linie skelettale Strukturen verändert werden, weshalb es günstiger ist, wenn Palatinal-Distraktoren skelettal abgestützt sind.

Hierzu sind bereits verschiedene Palatinal-Distraktoren vorgeschlagen worden, die aber - je nach Modell des Distraktors - noch einige Nachteile aufweisen, die darin begründet liegen, dass an einen solchen Palatinal-Distraktor verschiedene Anforderungen gestellt werden, um ihn für den genannten Einsatzzweck besonders geeignet zu machen. Hier ist beispielsweise zu erwähnen, dass bei einer Betätigung des Antriebselements mit Hilfe eines Werkzeugs der Verstellweg des Antriebselements stets in gleicher Weise proportional zu dem Weg ist, um welchen der Distraktor verstellt wird. Weiterhin soll die Verstellung des Distraktors mit einer kontinuierlichen Bewegung des Verstellwerkzeugs möglich sein, und nicht das Verstellwerkzeug nach einem bestimmten erfolgten Verstellweg neu angesetzt werden müssen, um den Distraktionsvorgang weiter fortsetzen zu können, da dies zu Schwierigkeiten und/oder Ungenauigkeiten bei einer eigenständigen Verstellung des Distraktors durch den Patienten führen kann. Ferner sollte die Bauweise des Distraktors möglichst geschlossen sein, damit sich keine Essensreste im Distraktor festsetzen können.

Ein Distraktor, der diese Anforderungen zu erfüllen vermag, ist der sogenannte "Magdeburg Palatinal-Distraktor" der Firma Gebrüder Martin GmbH & Co. KG, Tuttlingen, Bundesrepublik Deutschland. Dieser Distraktor weist zwei Distraktionskörper auf, welche jeweils koaxial auf zwei verschiedenen Gewindeabschnitten einer Distraktionsspindel angeordnet sind und bei Betätigung des Antriebselements in entgegengesetzter Richtung voneinander weg bzw. aufeinander zu bewegt werden. Das Antriebselement weist einen vorstehenden Sechskantstummel auf, auf welchen transoral ein Werkzeug mit einer entsprechenden Sechskantaufnahme aufgesetzt werden kann, welches ansonsten ähnlich einem Schraubendreher ist. Mit diesem Distraktor ist beim Distraktionsvorgang eine dem Verstellweg des Antriebselements proportionale kontinuierliche Verstellung der beiden Distraktionskörper möglich, ohne dass das Werkzeug mehrfach angesetzt werden muss. Der "Magdeburg Palatinal-Distraktor" weist ansonsten zwei Knochenplatten auf, von denen jeweils eine radial am jeweiligen Distraktionskörper befestigt ist.

Dieser Distraktor ist an sich funktionstüchtig. Allerdings ist es so, dass die beiden Knochenplatten am Gaumensegel befestigt werden müssen, was insofern nachteilig ist, als die Krafteinleitung in den Gaumen in einer Richtung erfolgt, die erheblich von der Richtung abweicht, in welche die beiden Gaumenhälften distrahiert werden sollen. Ausserdem ist es in solchen Fällen immer vorteilhaft, wenn die Knochenplatten submucosal am Gaumensegel befestigt werden, da ansonsten das zwischen der Knochenplatte und dem knöchernen Gaumensegel liegende Weichgewebe beim Distraktionsvorgang eine schlechtere Kraftübertragung zur Folge haben kann. Andererseits ist eine submucosale Befestigung des Distraktors aufgrund des hierfür erforderlichen chirurgischen Eingriffs für den Patienten belastend..Weiterhin ist insbesondere bei Kindern das Gaumensegel oft noch weich, sodass in solchen Fällen einen Anwendung dieses Distraktors nicht in Betracht kommt.

Die EP 1 147 745 beschreibt einen Distraktor mit einem in seiner Längenabmessung verlängerbaren und/oder verkürzbaren Extensionsteil, das an seinen beiden Enden ein punktförmiges Knochenabstützungsteil aufweist. Die Knochenabstützungsteile können dabei teller- oder wulstartige Verdickungen aufweisen, um ein besseres Einwachsen in die Schleimhaut zu ermöglichen. Das Extensionsteil kann durch Drehung eines Gewindes verlängert und/oder verkürzt werden.

Der vorliegenden Erfindung liegt daher die Aufgabe zugrunde, einen enoralen Palatinal-Distraktor vorzuschlagen, der die vorstehend genannten Nachteile nicht aufweist, ohne dabei jedoch auf die Vorteile des vorstehend genannten gattungsgemässen Distraktors zu verzichten.

Dies wird durch den erfindungsgemässen enoralen Palatinal-Distraktor, wie er durch die Merkmale des unabhängigen Patentanspruchs charakterisiert ist, gelöst. Vorteilhafte Weiterbildungen des erfindungsgemässen Palatinal-Distraktors sind Gegenstand der abhängigen Patentansprüche.

Insbesondere umfasst der erfindungsgemässen enorale Palatinal-Distraktor eine Distraktionsspindel mit einem Aussengewinde, welches mindestens zwei Gewindeabschnitte aufweist, einen ersten Gewindeabschnitt mit einem Linksgewinde und einen zweiten Gewindeabschnitt mit einem Rechtsgewinde. Ferner umfasst der erfindungsgemässe enorale Palatinal-Distraktor zwei Distraktionskörper, die koaxial zur Distraktionsspindel auf diesen Gewindeabschnitten angeordnet sind, nämlich einen ersten Distraktionskörper auf dem ersten Gewindeabschnitt und einen zweiten Distraktionskörper auf dem zweiten Gewindeabschnitt. Die Distraktionskörper weisen jeweils ein dem Aussengewinde des Gewindeabschnitts, auf welchem sie angeordnet sind, entsprechendes Innengewinde auf, welches mit dem Aussengewinde des Gewindeabschnitts in Eingriff steht. Beim Drehen der Distraktionsspindel sind die beiden Distraktionskörper in entgegengesetzter Richtung entlang der Distraktionsspindel verschiebbar, ohne sich beim Verschieben zu drehen. Der erfindungsgemässe enorale Palatinal-Distraktor umfasst ferner ein Antriebselement, welches mit der Distraktionsspindel in Eingriff steht. Das Antriebselement weist einen Angriffsbereich auf, der so ausgebildet ist, dass mit einem zugehörigen Verstellwerkzeug mit einer kontinuierlichen Bewegung des Verstellwerkzeugs ein Verschieben der Distraktionskörper zwischen einer ersten Endposition, bei der die beiden Distraktionskörper einen maximalen Abstand voneinander haben, und einer zweiten Endposition, bei der die beiden Distraktionskörper einen minimalen Abstand voneinander haben, möglich ist. Die Distraktionskörper des erfindungsgemässen enoralen Palatinal-Distraktors weisen jeweils eine in axialer Richtung nach aussen vom Distraktor weg weisende Fixationsspitze auf, welche mit Mitteln zur Übertragung der Distraktionskraft im wesentlichen in axialer Richtung auf die jeweilige Gaumenhälfte versehen ist.

Die jeweilige in axialer Richtung nach aussen vom Distraktor weg weisende Fixationsspitze erlaubt eine transmucosale Befestigung des Distraktors in einem lateralen Bereich des Gaumens unmittelbar oberhalb des Alveolarkamms oder sogar im Bereich des Alveolarkamms selbst, wo in jedem Falle eine skelettale Befestigung des Distraktors in ausreichend hartem Knochenmaterial möglich ist, ohne dass hierzu ein chirurgischer Eingriff erforderlich ist. Diese Befestigung ist für den Patienten erheblich weniger belastend. Zu einer guten Kraftübertragung bei der Distraktion tragen die Mittel zur Übertragung der Distraktionskraft im wesentlich in axialer Richtung bei, denn sie bewirken eine Krafteinleitung im wesentlichen in derjenigen Richtung, in welche die beiden Gaumenhälften distrahiert werden sollen. Auch für einen Einsatz bei Kindern ist der Distraktor geeignet, weil er eben einerseits auf vergleichsweise wenig belastende Art und Weise befestigbar ist, und weil er an einem Ort befestigt ist, wo auch bereits bei Kindern ein ausreichend hartes Knochenmaterial vorhanden ist.

Bei einem Ausführungsbeispiel des erfindungsgemässen Palatinal-Distraktors weist die Fixationsspitze eine Mehrzahl von abgeflachten Bereichen, beispielsweise vier abgeflachte Bereiche, auf. Durch diese abgeflachten Bereiche wird eine besonders gute drehfeste Befestigung der Fixationsspitze im Knochen erreicht.

Bei einem weiteren Ausführungsbeispiel des erfindungsgemässen Palatinal-Distraktors umfassen die Mittel zur Übertragung der Distraktionskraft auf die jeweilige Gaumenhälfte ein proximal zur Fixationsspitze auf dem Distraktionskörper kippbar gelagertes ringförmiges Element. Dieses kippbar gelagerte Element kann sich bestmöglich an die Stelle des Gaumens anlegen, an der die Fixationsspitze in durch die Mukosa in den Knochen eindringt, wodurch eine gute Kraftübertragung beim Distraktionsvorgang erfolgt.

Bei einem weiteren Ausführungsbeispiel des erfindungsgemässen Palatinal-Distraktors weist der Distraktionskörper ein mit ihm verbundenes Sicherungsorgan auf, z.B. eine Lasche. Das Sicherungsorgan, z.B. die Lasche, steht im wesentlichen radial vom Distraktionskörper ab. In dem Sicherungsorgan, z.B. der Lasche ist mindestens ein Durchgangsloch vorgesehen, durch welches ein Befestigungselement, z.B. eine Knochenschraube, in den Gaumen einbringbar ist. Das Sicherungsorgan lässt sich gut an das Gaumensegel anbiegen und mit Hilfe z.B. einer Knochenschrauben transmucosal am Gaumensegel befestigen. Das Sicherungsorgan hat zwei besonders wesentliche Funktionen: Einerseits sichert es den Distraktor gegen Verdrehen, andererseits ist durch die Befestigung des Sicherungsorgans, z.B. der Lasche, am Gaumensegel der Distraktor gegen Aspiration gesichert. Das Sicherungsorgan ist mit dem Distraktionskörper verbunden, was beispielsweise mit Hilfe einer Laserschweissung erfolgen kann, sodass das Sicherungsorgan nicht lösbar mit dem Distraktionskörper verbunden ist. Man könnte sich aber auch eine lösbare Verbindung vorstellen, insbesondere wenn die Distraktion in mehreren Etappen erfolgen muss. Dann kann nämlich nach abgeschlossener erster Etappe der Distraktion das Sicherungsorgan vom Rest des Distraktors gelöst werden, aber am Gaumensegel befestigt bleiben und es kann ein neuer Distraktor (allerdings ohne Sicherungsorgan) eingesetzt werden, der die nächste Etappe der Distraktion bewirkt. Das bereits am Gaumensegel befestigte Sicherungsorgan braucht dann nicht mehr erneut am Gaumensegel des Patienten befestigt zu werden, was weniger belastend für den Patienten ist.

Bei einer Weiterbildung dieses Ausführungsbeispiels des erfindungsgemässen Palatinal-Distraktors ist in dem Durchgangsloch des Sicherungsorgans, z.B. der Lasche, eine Verblockungskontur vorgesehen zum Verblocken des Befestigungselements, z.B. einer Knochenschraube. Die Verblockungskontur bewirkt, dass die Lasche beim Befestigen am Gaumensegel nicht von dem Schraubenkopf gegen das Gaumensegel gepresst wird, sondern entweder lose am Gaumensegel anliegend oder sogar in geringem Abstand davon am Gaumensegel befestigt ist. Zu diesem Zweck geeignete Verblockungskonturen sind aus dem Stand der Technik hinreichend bekannt.

Bei einem weiteren Ausführungsbeispiel des erfindungsgemässen Palatinal-Distraktors weist die Distraktionsspindel zwischen den beiden Gewindeabschnitten einen Angriffsbereich auf, der mit einer Verzahnung versehen ist, welche mit einer entsprechenden Verzahnung des Antriebselements in Eingriff steht. Die Distraktionsspindel ist gleichzeitig in axialer Richtung unverschieblich gelagert, sodass beim Ineinandergreifen der Verzahnungen des Angriffsbereichs des Antriebselements und des Angriffsbereichs der Distraktionsspindel die Distraktionsspindel gedreht wird, aber sich axial nicht verschieben kann. Da die Distraktorkörper ebenfalls drehfest koaxial auf den entsprechenden Gewindeabschnitten der Distraktionsspindel angeordnet sind, werden beim Drehen des Antriebselements mittels eines geeigneten Werkzeugs somit lediglich die beiden Distraktionskörper in axialer Richtung voneinander weg bzw. aufeinander zu bewegt, je nach Richtung in welcher das Antriebselement gedreht wird.

Bei einem weiteren Ausführungsbeispiel des erfindungsgemässen Palatinal-Distraktors weist der Angriffsbereich des Antriebselements, an welchem das Verstellwerkzeug angreift, einen Innensechskant auf. Ein Innensechskant ist eine Eingriffskontur, welche mit Hilfe eines passenden Inbuswerkzeugs zuverlässig betätigbar ist.

Vorzugsweise sind bei dem erfindungsgemässen Palatinal-Distraktor sämtliche Teile des Distraktors aus einem biokompatiblen Material hergestellt, wobei zumindest diejenigen Teile des Distraktors, die mit dem Gaumen in Kontakt kommen, aus Titan oder einer Titanlegierung hergestellt sind.

Weitere vorteilhafte Aspekte ergeben sich aus der nachfolgenden Erläuterung eines Ausführungsbeispiels des erfindungsgemässen Palatinal-Distraktors mit Hilfe der Zeichnung. Es zeigen:
- Fig. 1: ein Ausführungsbeispiel des erfindungsgemässen Palatinal-Distraktors, wobei die beiden Distraktionskörper einen minimalen Abstand haben (eingefahrene Position)
- Fig. 2: das Ausführungsbeispiel des Distraktors aus Fig. 1, wobei die Distraktionskörper einen maximalen Abstand haben (ausgefahrene Position)
- Fig. 3: die Distraktionsspindel des Ausführungsbeispiels des Distraktors aus Fig. 1 in einer perspektivischen Darstellung,
- Fig. 4: eine Ansicht eines Distraktionskörpers des Ausführungsbeispiels des Distraktors aus Fig. 1 (ohne Sicherungslasche)
- Fig. 5: einen Längsschnitt durch den Distraktionskörper,
- Fig. 6: ein Ausführungsbeispiel der Sicherungslasche alleine,
- Fig. 7: eine Ansicht des Distraktionskörpers mit Sicherungslasche,
- Fig. 8: ein Ausführungsbeispiel der Antriebsspindel (Antriebselement) des Ausführungsbeispiels des Distraktors aus Fig. 1,
- Fig. 9: eine Aufsicht auf die Antriebsspindel aus Fig. 8
- Fig. 10: eine Ansicht der Distraktionshülse des Ausführungsbeispiels des Distraktors aus Fig. 1,
- Fig. 11: einen Schnitt entlang der Linie XI-XI in Fig. 10,
- Fig. 12: eine weitere Ansicht der Distraktionshülse, jedoch gegenüber der Ansicht aus Fig. 10 um einen Winkel um die Längsachse der Distraktionshülse gedreht,
- Fig. 13: einen Schnitt entlang der Linie XIII-XIII in Fig. 12,
- Fig. 14: das Ausführungsbeipsiel des Distraktors aus Fig. 1, jedoch um einen Winkel um die Längsachse des Distraktors gedreht, mit der Schnittlinie XV-XV
und
- Fig. 15: das Ausführungsbeispiel des Distraktors gemäss Fig. 14 in Schnittdarstellung entlang der Linie XV-XV in Fig. 14.

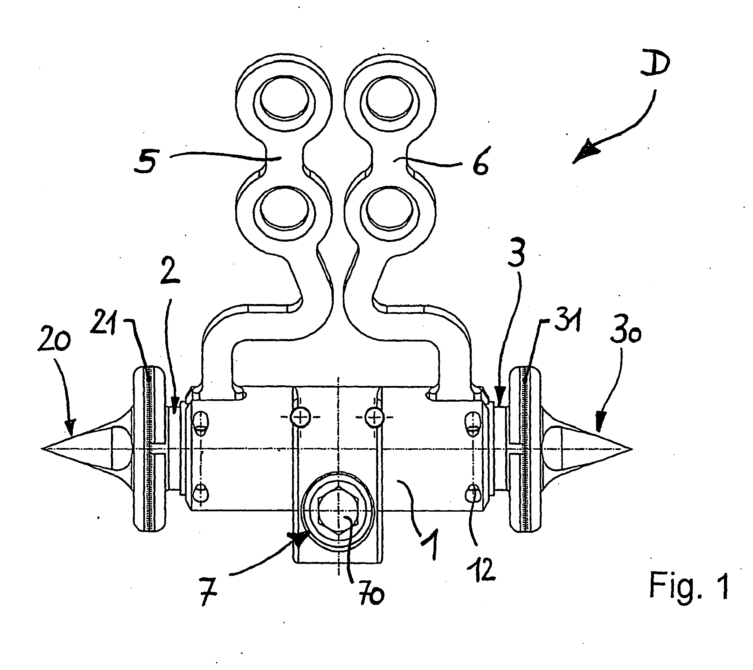

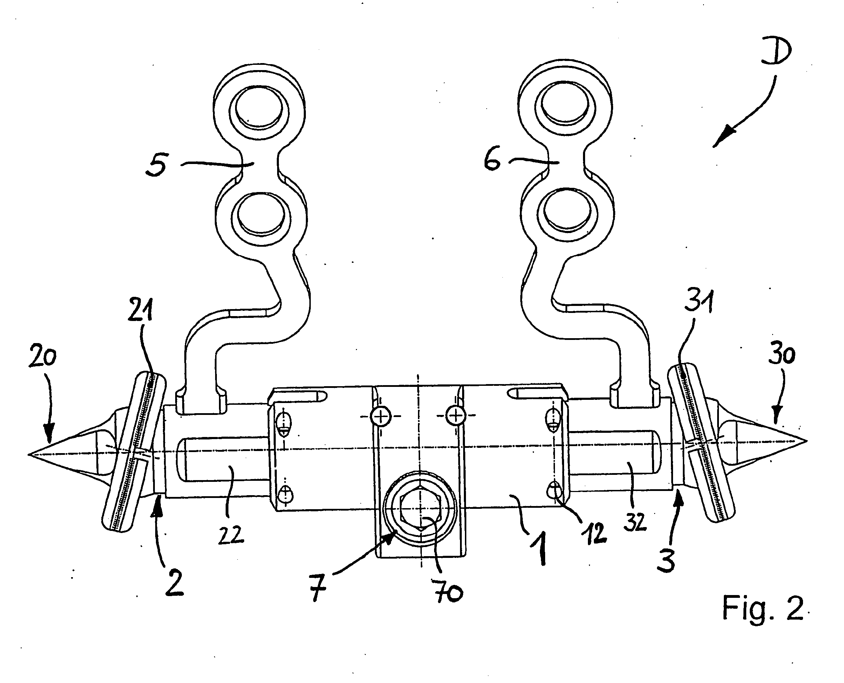

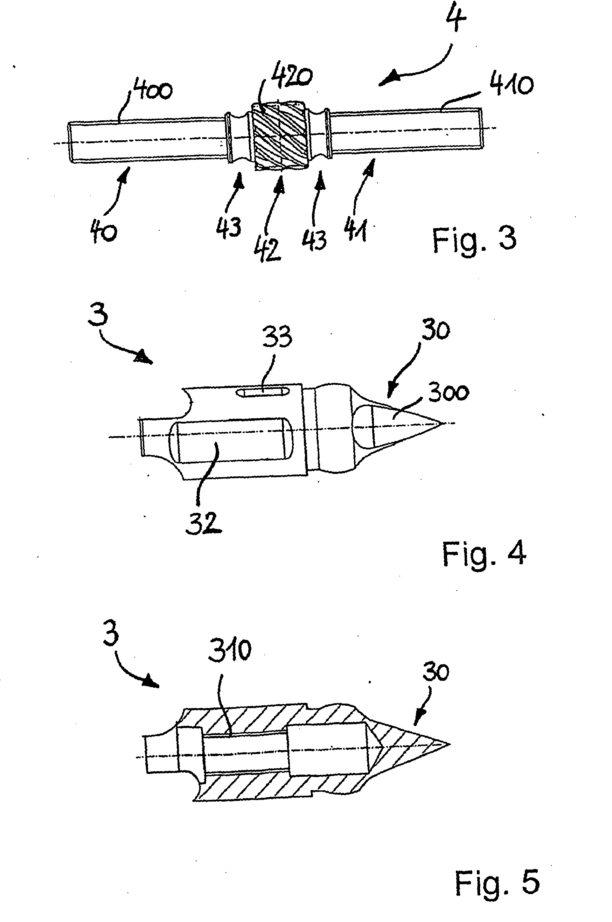

In Fig. 1 und Fig. 2 ist ein Ausführungsbeispiel des erfindungsgemässen enoralen Palatinal-Distraktors D gezeigt. In Fig. 1 ist der Distraktor D in der eingefahrenen Position dargestellt, in Fig. 2 in der ausgefahrenen Position. Der Distraktor D umfasst eine Distraktionshülse 1, einen ersten Distraktionskörper 2 und einen zweiten Distraktionskörper 3, die auf einer Distraktionsspindel 4 (in Fig. 1 und Fig. 2 nicht zu erkennen, siehe Fig. 3), sowie zwei Sicherungsorgane in Form von an das Gaumensegel des jeweiligen Patienten anbiegbaren Laschen 5 bzw. 6, wobei die eine Lasche 5 mit dem ersten Distraktionskörper 2 und die andere Lasche 6 mit dem zweiten Distraktionskörper 3 verbunden ist. Die beiden Distraktionskörper 2 bzw. 3 weisen jeweils eine nach aussen vom Distraktor weg weisende Fixationsspitze 20 bzw. 30 auf, welche beispielsweise dazu bestimmt ist, am oberen Rand des Alveolarkamms oberhalb der Zahnwurzeln befestigt zu werden oder im harten Gaumen knapp oberhalb des Alveolarkamms. Diese Befestigung der jeweiligen Fixationsspitze 20 bzw. 30 kann transmucosal erfolgen, das heisst, dass keine chirurgische Darstellung des Knochens erfolgen muss, um den Distraktor setzen zu können, was für den Patienten erheblich weniger belastend ist. Ferner erkennt man in Fig. 1 und Fig. 2 noch, dass auf dem jeweiligen Distraktionskörper 2 bzw. 3 - jeweils proximal zur Distraktionsspitze 20 bzw. 30 - ein ringförmiges Element 21 bzw. 31 kippbar gelagert ist, welches zur Anlage an der Mucosa am Gaumen des Patienten bestimmt ist. Die Verkippbarkeit der ringförmigen Elemente 21 und 31 ist gut in Fig. 2 zu erkennen, in welcher der Palatinal-Distraktor D in ausgefahrener Position dargestellt ist. Das jeweilige ringförmige Element 21 bzw. 31 kann aus zwei Halbringen bestehen, von denen der jeweils proximale Halbring einen Schlitz aufweist, damit er sich beim Zusammenbau des Distraktors D über den jeweiligen Distraktionskörper 2 bzw. 3 schieben lässt, was für den distalen Halbring nicht möglich ist. Die beiden Halbringe können dann jeweils durch Laserschweissen miteinander verbunden werden und bilden dann das jeweilige ringförmige Element 21 bzw. 31. Schliesslich erkennt man in Fig. 1 und Fig. 2 noch die Antriebsspindel 7, welche einen Angriffsbereich für ein Verstellwerkzeug aufweist, wobei der Angriffsbereich mit einem Innensechskant 70 versehen ist, sodass eine kontinuierliche Verstellung des Distraktors D beispielsweise mit Hilfe eines geeigneten Inbusschlüssels erfolgen kann. Der Verstellweg ist dabei immer in gleicher Weise proportional zum Verstellweg des Inbusschlüssels.

In Fig. 3 erkennt man die Distraktionsspindel 4 des Ausführungsbeispiels des erfindungsgemässen Distraktors D. Die Distraktionsspindel 4 hat zwei Gewindeabschnitte, einen ersten Gewindeabschnitt 40 mit einem Linksgewinde 400 und einen zweiten Gewindeabschnitt 41 mit einem Rechtsgewinde 410. Ausserdem weist die Distraktionsspindel 4 einen Angriffsbereich 42 auf, welcher mit einer Verzahnung 420 versehen ist, die mit einer entsprechenden Verzahnung der Antriebsspindel in Eingriff steht (wird noch erläutert). Neben dem Angriffsbereich 42 sind zwei umlaufende Nuten 43 angeordnet, in die zwei Stifte eingreifen (siehe Bohrungen in Fig. 1 bzw. Fig. 14 und Fig. 15), welche die Distraktionsspindel 4 beim Antrieb mit Hilfe der Antriebsspindel 7 in der Distraktionshülse 1 an Ort und Stelle halten.

In Fig. 4 und Fig. 5 erkennt man einen Distraktionskörper des erfindungsgemässen enoralen Palatinal-Distraktors D, beispielsweise den zweite Distraktionskörper 3, einmal in einer Ansicht (Fig. 4) und einmal in einer Schnittdarstellung. Es versteht sich, dass die nachfolgenden Ausführungen zum zweiten Distraktionskörper 3 sinngemäss auch für den ersten Distraktionskörper 2 gelten, wobei dort allerdings das Linksgewinde durch ein Rechtsgewinde ersetzt ist. Der zweite Distraktionskörper 3 ist, wie aus Fig. 5 ersichtlich, hülsenartig aufgebaut und ist mit einem Innengewinde 310 versehen, welches korrespondierend zu dem Aussengewinde 410 des zugehörigen Gewindeabschnitts 41 der Distraktionsspindel 4 ausgebildet ist, hier korrespondierend zu dem Rechtsgewinde 410 des Gewindeabschnitts 41 der Distraktionsspindel 4. Auf seiner Aussenwand weist der hülsenartige Distraktionskörper 3 einen abgeflachten Bereich 32 auf. Dieser abgeflachte Bereich 32 des Distraktionskörpers 3 steht im zusammengebauten Zustand des Distraktors D mit einem Stift 12 in Eingriff, welchen man beispielsweise in Fig. 1 und Fig. 2 erkennen kann. Dieser Stift 12 bewirkt zusammen mit dem abgeflachten Bereich 32, dass sich beim Drehen der Distraktionsspindel 4 der koaxial zur Distraktionsspindel 4 angeordnete Distraktionskörper 3 zwar in axialer Richtung entlang der Distraktionsspindel 4 bewegen kann, aber sich bei dieser Bewegung nicht drehen kann. Gleichzeitig begrenzt der abgeflachte Bereich 32 den Weg, um den der Distraktionskörper 3 bewegt werden kann.

Die Fixationsspitze 30 des Distraktionskörpers 3 weist eine Mehrzahl von abgeflachte Bereiche auf, bei dem hier gezeigten Ausführungsbeispiel sind dies vier abgeflachte Bereiche 300. Diese Bereiche bewirken eine Sicherung der Fixationsspitze 30 gegen Verdrehen, wenn die Fixationsspitze 30 im Knochen verankert ist. Weiterhin umfasst der zweite Distraktionskörper 3 eine Aufnahme in Form einer Nut 33, in welcher ein Ansatzstück der zugehörigen Lasche 6 (Fig. 1) aufgenommen wird.

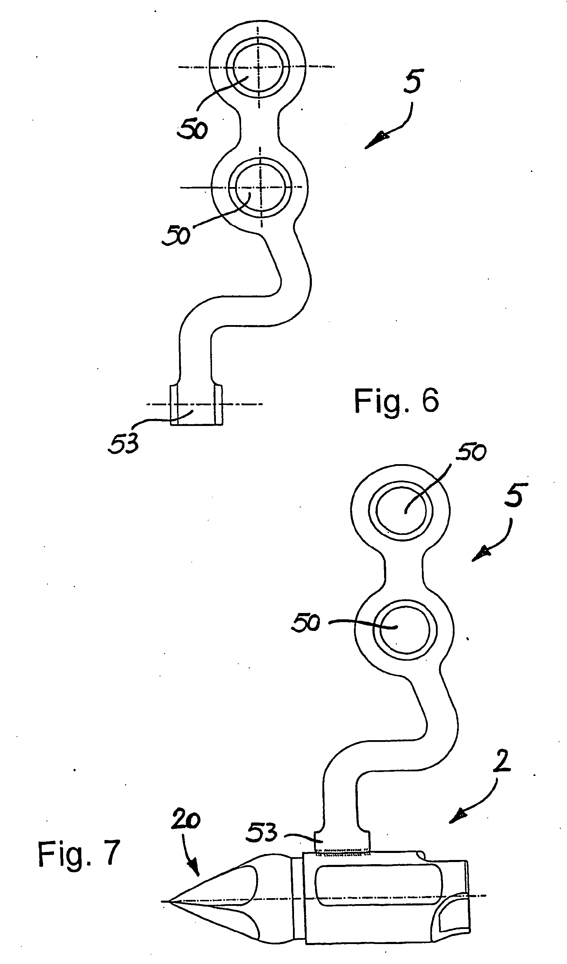

Dies kann man besonders gut mit Hilfe von Fig. 6 und Fig. 7 erkennen, wo allerdings der erste Distraktionskörper 2 dargestellt ist, der aber ja genau so ausgebildet ist wie der in Fig. 4 und Fig. 5 dargestellte zweite Distraktionskörper 3, ausser dass natürlich der erste Distraktionskörper 2 ein Rechtsgewinde anstelle des Linksgewindes 310 des zweiten Distraktionskörpers 3 aufweist. In Fig. 6 ist die Lasche 5 dargestellt, welche hier jeweils zwei Ösen mit angesenkten Löchern 50 aufweist zur Aufnahme von Befestigungsmitteln. Beim Setzen des Distraktors D kann die Lasche 5 (ebenso wie die Lasche 6, siehe Fig. 1) an das Gaumensegel des Patienten angebogen werden und mit einem geeigneten Befestigungsmittel, z.B. einer Knochenschraube, am Gaumensegel befestigt werden, was eine Sicherung gegen Aspiration bewirkt. In den Löchern 50 der Ösen der Lasche 5 kann bei Bedarf eine Verblockungskontur vorgesehen sein, welche es erlaubt die Lasche 5 entweder lose am Gaumensegel anliegend oder, falls erwünscht, sogar in geringem Abstand davon zu befestigen. Es können aber auch Löcher 50 ohne Verblockungskontur vorgesehen sein.

Die Lasche 5 weist ferner ein Ansatzstück 53 auf, welches in die der Nut 33 (siehe Fig. 4) entsprechende Nut des ersten Distraktionskörpers 2 eingesetzt wird. Die Lasche 5 kann dann beispielsweise durch Laserschweissen (angedeutet in Fig. 7 durch die feinen Linien im Bereich des Ansatzstücks 53) fest mit dem Distraktionskörper 2 verbunden sein, aber es kommen grundsätzlich auch lösbare Verbindungen von Lasche 5 und Distraktionskörper 2 in Betracht, aus den weiter vorne genannten Gründen (Laschen können dann bei einem weiteren Distraktionsvorgang mit dem Gaumensegel verbunden bleiben). Es versteht sich erneut von selbst, dass die anhand von Fig. 6 und Fig. 7 für den ersten Distraktionskörper 2 angestellten Betrachtungen analog auch für den zweiten Distraktionskörper 3 gelten.

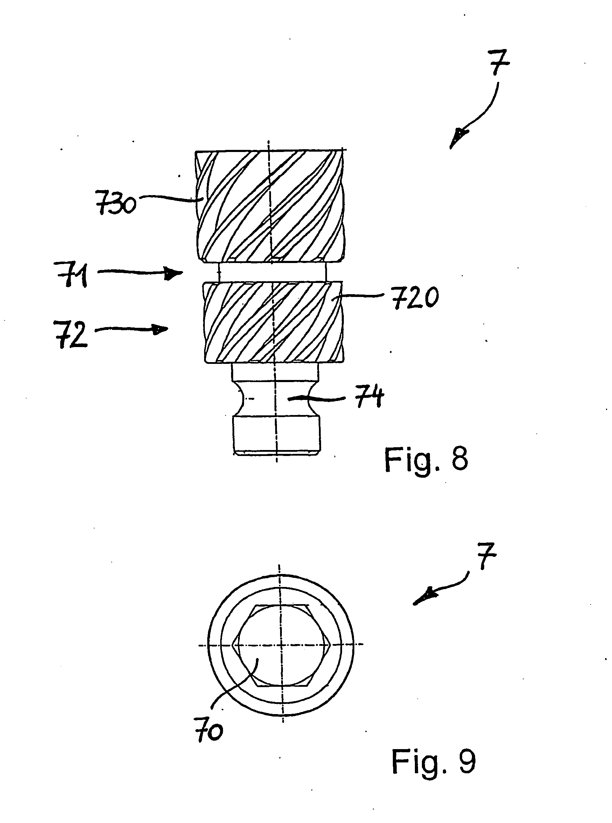

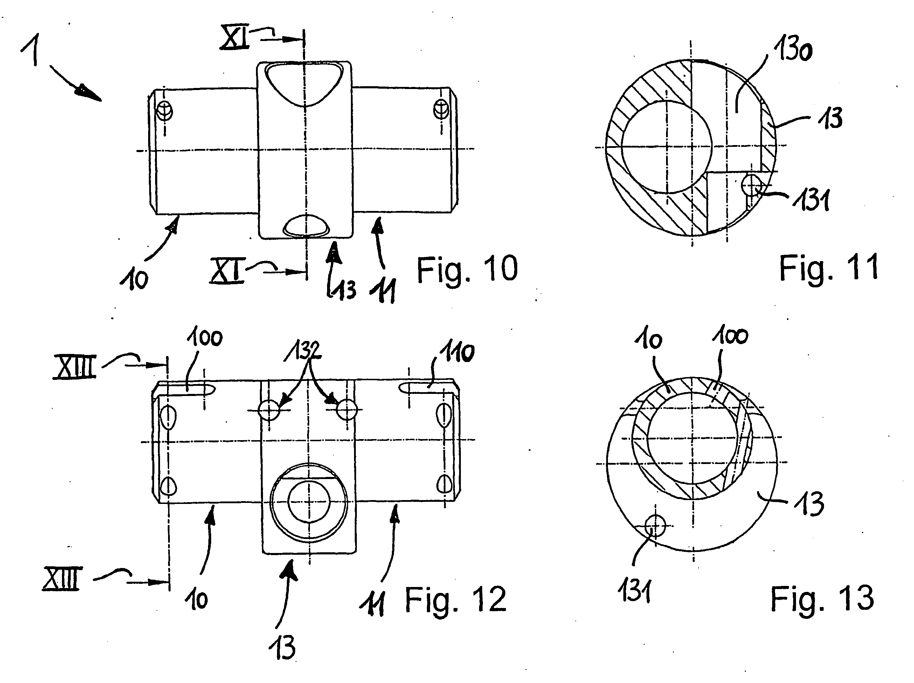

In Fig. 8 und Fig. 9 erkennt man das Antriebselement dieses Ausführungsbeispiels des erfindungsgemässen Palatinal-Distraktors D in Form der Antriebsspindel 7, und zwar in Fig. 8 in einer Ansicht und in Fig.. 9 in Aufsicht. Die Antriebsspindel 7 weist einen Eingriffsbereich 72 auf, der mit einer Verzahnung 720 versehen ist, und der im zusammengebauten Zustand des Distraktors D mit der Verzahnung 420 des Angriffsbereichs 42 der Distraktionsspindel in Eingriff steht. Oberhalb des Angriffsbereichs 72 weist die Antriebsspindel 7 einen Einstich 71 auf und oberhalb des Einstichs wieder eine Verzahnung 730, die im Prinzip eine Fortsetzung der Verzahnung 720 ist. Sowohl der Einstich 71 als auch die Verzahnung 730 sind bei diesem Ausführungsbeispiel lediglich herstellungsbedingt vorhanden, zur Funktion der Antriebsspindel 7 tragen sie nicht bei. Unterhalb der Verzahnung 72 weist die Antriebsspindel 7 einen zylindrischen Fortsatz mit einer umlaufenden Nut 74 auf. Diese Nut 74 befindet sich im zusammengebauten Zustand des Distraktors D im Eingriff mit einem Stift (Bohrung für diesen Stift in Fig. 11 und Fig. 13 zu erkennen). Von oben her ist die Antriebsspindel 7 mit einem Innensechskant 70 versehen, der beispielsweise mit Hilfe eines entsprechenden Inbusschlüssels kontinuierlich verstellt (gedreht) werden kann.

In Fig. 10 - Fig. 13 ist die Distraktionshülse 1 des beschriebenen Ausführungsbeispiels des erfindungsgemässen Palatinal-Distraktors D dargestellt, und zwar in einer Ansicht in Fig. 10 und in Fig. 11 in einem Schnitt entlang der Linie XI-XI in Fig. 10, sowie in Fig. 12 in einer Ansicht, die gegenüber der Ansicht aus Fig. 10 um einen Winkel verdreht ist und in Fig. 13 in einem Schnitt entlang der Linie XIII-XIII in Fig. 12. Die Distraktionshülse 1 weist zwei Seitenabschnitte 10 und 11 auf, die im zusammengebauten Zustand des Distraktors D die Distraktionsspindel 4 und die Distraktionskörper 2 und 3 im wesentlichen koaxial aufnehmen. Ausserdem weist die Distraktionshülse 1 einen zentralen Abschnitt 13 auf, welcher exzentrisch angeordnet ist und in welchem eine Bohrung 130 vorgesehen ist, in der die Antriebsspindel 7 aufgenommen wird (siehe Fig. 11). Nach dem Einsetzen der Antriebsspindel 7 in die Bohrung 130 im zentralen Bereich 13 der Distraktionshülse 1 kann ein Stift (nicht dargestellt) in eine Bohrung 131 eingesetzt und dort z.B. mittels Laserschweissen derart befestigt werden, dass der (nicht dargestellte) Stift dann in die Nut 74 der Antriebsspindel 7 eingreift und die Antriebsspindel 7 in deren axialer Richtung an Ort und Stelle hält, aber eine Drehung der Antriebsspindel 7 um ihre Achse ermöglicht.

In der - um einen Winkel gegenüber der Darstellung aus Fig. 11 verdrehten - Darstellung der Distraktionshülse 1 in Fig. 13 erkennt man sowohl die beiden Schlitze 100 bzw. 110, in welche die beiden Ansatzstücke der Laschen 5 bzw. 6 beim Zusammenfahren der beiden Distraktionskörper 2 bzw. 3 hineingleiten können, um ein vollständiges Zusammenfahren des Distraktors zu ermöglichen. Ausserdem erkennt man auch die beiden Bohrungen 132, in welche nach dem Einsetzen der Distraktionsspindel 4 und der Distraktionskörper 2 bzw. 3 ein Stift eingesetzt werden kann, welcher im zusammengebauten Zustand des Distraktors D in die Nuten 43 beiderseits des Angriffsbereichs 42 eingreift.

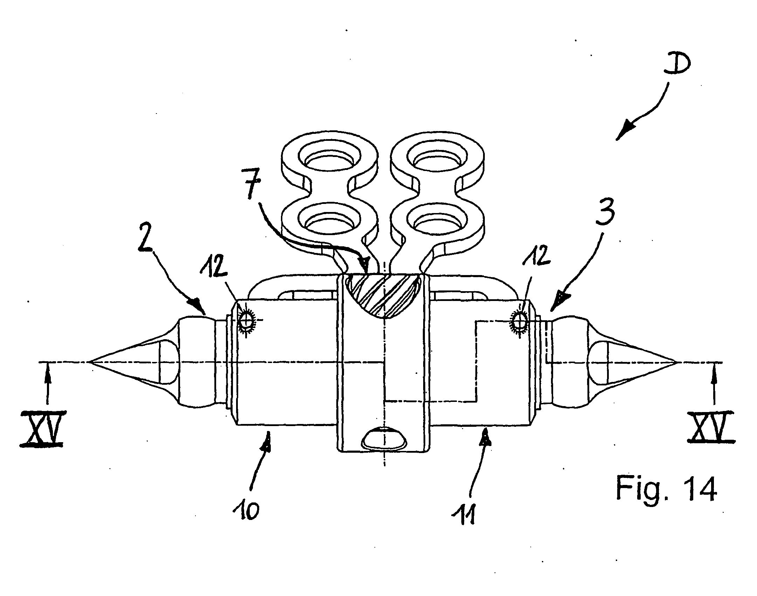

In Fig. 14 ist das beschriebene Ausführungsbeispiel des erfindungsgemässen enoralen Palatinal-Distraktors D noch einmal im zusammengebauten Zustand gezeigt, und zwar in eingefahrener Position (allerdings ohne die ringförmigen Elemente 21 bzw. 31). Man erkennt insbesondere die mittels Laserschweissen in den Seitenabschnitten 10 bzw. 11 der Distraktionshülse 1 fest angeordneten Stifte 12, mit denen ein (Mit-)Drehen der Distraktionskörper 2 bzw. 3 beim Drehen der Distraktionsspindel 4 und dem dadurch bewirkten Ein- bzw. Ausfahren der Distraktionskörper 2 bzw. 3 verhindert wird. Ausserdem erkennt man noch die Antriebsspindel 7 und auch den Verlauf der Schnittlinie XV-XV.

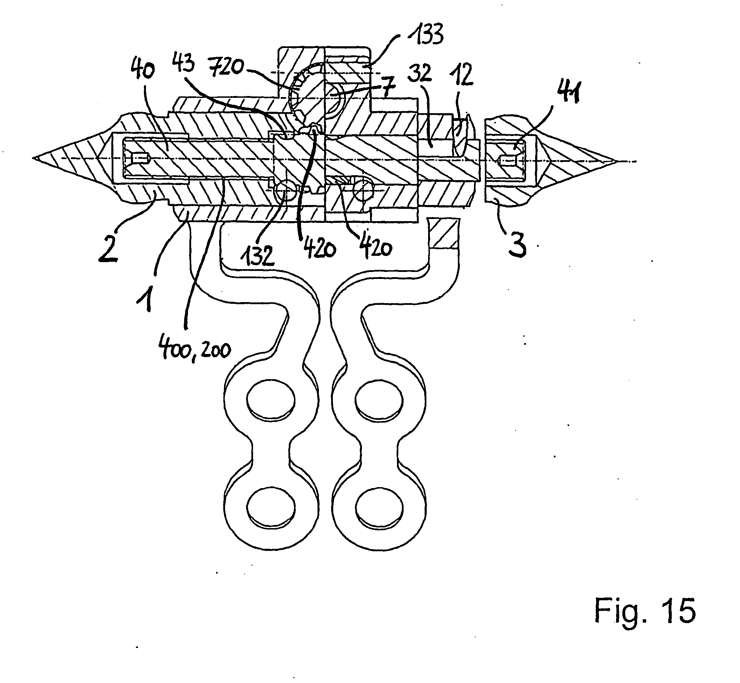

In Fig. 15 schliesslich ist das in Fig. 14 dargestellte Ausführungsbeispiel des erfindungsgemässen Palatinal-Distraktors D in einem Schnitt entlang der Linie XV-XV von Fig. 14 gezeigt. Anhand von Fig. 15 soll im folgenden auch die Funktionsweise des Palatinal-Distraktors D erläutert werden.

In der linken Hälfte von Fig. 15 erkennt man einerseits, wie der erste Distraktionskörper 2 auf dem ersten Gewindeabschnitt 40 der Distraktionsspindel 4 angeordnet ist. Ausserdem erkennt man in der linken Hälfte von Fig. 15, wie die Verzahnung 420 im Angriffsbereich 42 (siehe Fig. 3) der Distraktionsspindel 4 mit der Verzahnung 720 im Eingriffsbereich 72 (siehe Fig. 8) der Antriebsspindel 7 in Eingriff steht. Beim Drehen der Antriebsspindel 7, z.B. durch Einsetzen eines geeigneten Inbusschlüssels in den Innensechskant 70 der Antriebsspindel (siehe z.B. Fig. 1), kann die Antriebsspindel 7 gedreht werden. Da Stifte in die Nuten 43 der Distraktionsspindel 4 eingreifen (in Fig. 15 sind nur entsprechende Bohrungen 132 für diese Stifte dargestellt, siehe auch Fig. 12), kann sich die Distraktionsspindel 4 zwar drehen, aber nicht axial bewegen. Über den Eingriff des Aussengewindes 400 (Linksgewinde) des ersten Gewindeabschnitts 40 (siehe Fig. 3) der Distraktionsspindel 4 in das Innengewinde 200 des Distraktionskörpers 2 wird der Distraktionskörper 2 mitbewegt. Da er sich aufgrund des Eingriffs der Stifte 12 in den abgeflachten Bereich 22 (siehe Fig. 2) aber nicht mit der Distraktionsspindel 4 mitdrehen kann, verschiebt sich der Distraktionskörper 2 in axialer Richtung, also entlang der Distraktionsspindel 4, er kann somit auf diese Weise durch kontinuierliches Drehen der Antriebsspindel 7, z.B. mit Hilfe eines geeigneten Inbusschlüssels, kontinuierlich verstellt werden, wobei der axiale Verstellweg des Distraktionskörpers 2 über den gesamten Verstellbereich hinweg in gleicher Weise proportional zur Verstellung der Antriebsspindel 7 ist.

In der rechten Hälfte erkennt man den Stift 12, der in den abgeflachten Bereich 32 des Distraktionskörpers 3 eingreift, wobei der Distraktionskörper 3 hier in der eingefahrenen Position dargestellt ist (Stift 12 am Anschlag des abgeflachten Bereichs 32). Ausserdem erkennt man einen Stift 133, welcher in der Bohrung 131 (siehe Fig. 11 und Fig. 13) befestigt ist und die Antriebsspindel 7 sichert, indem er in deren umlaufende Nut 74 (siehe Fig. 8) eingreift.

Beim Setzen des Distraktors D werden die Fixationsspitzen 20 bzw. 30 transmucosal im Alveolarkamm oberhalb der Zahnwurzel oder im harten Gaumen oberhalb des Alveolarkamms befestigt. Aufgrund der abgeflachten Bereiche an den Fixationsspitzen 20 bzw. 30 sind diese dann drehfest im Knochen verankert. Die Laschen 5 und 6 können dann an das Gaumensegel angebogen werden und mit Hilfe von Knochenschrauben transmucosal befestigt und der Distraktor D somit gegen Aspiration gesichert werden. Danach kann mit Hilfe eines Inbusschlüssels, der in den Innensechskant 70 der Antriebsspindel 7 durch den Mund hindurch eingesteckt wird, die erste Etappe der Distraktion erfolgen, indem der Inbusschlüssel beispielsweise um eine Umdrehung gedreht wird. Dabei werden die beiden Distraktionskörper jeweils um einen dem Verstellweg der Antriebsspindel 7 stets in gleicher Weise proportionalen Weg axial nach aussen verstellt. Die ringförmigen Elemente legen sich dabei bestmöglich an den Gaumen des Patienten an. Die Distraktionskraft wird dabei im wesentlich in die Richtung in den Gaumen eingeleitet, in der die Distraktion erfolgen soll. Ist der Distraktor maximal ausgefahren bzw. die Distraktion im gewünschten Ausmass erfolgt, können mit dem Inbusschlüssel die beiden Distraktionskörper 2 bzw. 3 in umgekehrter Richtung wieder eingefahren werden, die Knochenschrauben an den Laschen 5 bzw. 6 gelöst werden und der Distraktor aus dem Mund heraus genommen werden.

Sämtliche Teile des erfindungsgemässen Palatinal-Distratkors D sind aus einem biokompatiblen Material hergestellt, beispielsweise aus Titan oder einer Titanlegierung. Insbesondere gilt dies jedoch für diejenigen Teile, die mit dem Knochen in Berührung kommen, weil Titan bzw. Titanlegierungen als knochenkompatibel anerkannte Materialien sind.

Vorstehend wurde der erfindungsgemässe Palatinal-Distraktor anhand eines speziellen Ausführungsbeispiels erläutert. Der Fachmann erkennt, dass verschiedene konstruktive Alternativen ebenfalls durch die Erfindung umfasst sind. Beispielsweise können die Sicherungslaschen entfallen und stattdessen andere Mittel zur Sicherung gegen Aspiration des Distraktors vorgesehen sein als die beschriebenen Lasche, oder anstelle der Antriebsspindel könnte das Antriebselement anders ausgebildet sein. Weitere gleichwirkende konstruktive Alternativen zu den Einzelheiten des beschriebenen Ausführungsbeispiels des erfindungsgemässen Palatinal-Distraktors erschliessen sich dem Fachmann ebenfalls als zur Erfindung gehörend.

## Patentansprüche

1. Enoraler Palatinal-Distraktor (D) mit einer Distraktionsspindel (4) mit einem Aussengewinde, welches mindestens zwei Gewindeabschnitte (40,41) aufweist, einen ersten Gewindeabschnitt (40) mit einem Linksgewinde (400) und einen zweiten Gewindeabschnitt (41) mit einem Rechtsgewinde (410), sowie mit zwei Distraktionskörpern (2,3), die koaxial zur Distraktionsspindel (4) auf diesen Gewindeabschnitten (40,41) angeordnet sind, nämlich ein erster Distraktionskörper (2) auf dem ersten Gewindeabschnitt (40) und ein zweiter Distraktionskörper (3) auf dem zweiten Gewindeabschnitt (410), und die jeweils ein dem Aussengewinde des Gewindeabschnitts, auf welchem sie angeordnet sind, entsprechendes Innengewinde (310) aufweisen, welches mit dem Aussengewinde (410) des Gewindeabschnitts (41) in Eingriff steht, wobei die beiden Distraktionskörper (2,3) beim Drehen der Distraktionsspindel (4) in entgegengesetzter Richtung entlang der Distraktionsspindel (4) verschiebbar sind, ohne sich beim Verschieben zu drehen, sowie mit einem Antriebselement (7), welches mit der Distraktionsspindel (4) in Eingriff steht und welches einen Angriffsbereich (72) aufweist, der so ausgebildet ist, dass mit einem zugehörigen Verstellwerkzeug mit einer kontinuierlichen Bewegung des Verstellwerkzeugs ein Verschieben der Distraktionskörper (2,3) zwischen einer ersten Endposition, bei der die beiden Distraktionskörper (2,3) einen maximalen Abstand voneinander haben, und einer zweiten Endposition, bei der die beiden Distraktionskörper (2,3) einen minimalen Abstand voneinander haben, möglich ist, wobei die Distraktionskörper (2,3) jeweils eine in axialer Richtung nach aussen vom Distraktor weg weisende Fixationsspitze (20,30) aufweisen, welche mit Mitteln (21,31) zur Übertragung der Distraktionskraft im wesentlichen in axialer Richtung auf die jeweilige Gaumenhälfte versehen ist, **dadurch gekennzeichnet, dass** jeder der Distraktionskörper (2,3) ein mit ihm verbundenes Sicherungsorgan (5,6) aufweist welches im wesentlichen radial vom Distraktionskörper (2,3) absteht und in welchem mindestens ein Durchgangsloch (50) vorgesehen ist, durch welches ein Befestigungselement, z.B. eine Knochenschraube, in den Gaumen einbringbar ist.

2. Palatinal-Distraktor nach Anspruch 1, bei welchem die Fixationsspitze (20,30) eine Mehrzahl von abgeflachten Bereichen, beispielsweise vier abgeflachte Bereiche (300), aufweist.

3. Palatinal-Distraktor nach einem der Ansprüche 1 oder 2, bei welchem die Mittel zur Übertragung der Distraktionskraft auf die jeweilige Gaumenhälfte einen proximal zur Fixationsspitze (20,30) auf dem Distraktionskörper (2,3) kippbar gelagertes ringförmiges Element (21,31) umfassen.

4. Palatinal-Distraktor nach Anspruch 1, bei welchem in dem Durchgangsloch (50) des Sicherungsorgans (5) eine Verblockungskontur vorgesehen ist zum Verblocken des Befestigungselements.

5. Palatinal-Distraktor nach einem der vorangehenden Ansprüche, bei welchem die Distraktionsspindel (4) zwischen den beiden Gewindeabschnitten (40,41) einen Angriffsbereich . (42) aufweist, der mit einer Verzahnung (420) versehen ist, welche mit einer entsprechenden Verzahnung (720) des Antriebselements (7) in Eingriff steht, wobei die Distraktionsspindel (4) in axialer Richtung unverschieblich gelagert ist.

6. Palatinal-Distraktor nach einem der vorangehenden Ansprüche, bei welchem der Angriffsbereich des Antriebselements (7), an welchem das Verstellwerkzeug angreift, einen Innensechskant (70) aufweist.

7. Palatinal-Distraktor nach einem der vorangehenden Ansprüche, bei welchem sämtliche Teile des Distraktors (D) aus einem biokompatiblen Material hergestellt sind, wobei zumindest diejenigen Teile des Distraktors (D), die mit dem Gaumen in Kontakt kommen, aus Titan oder einer Titanlegierung hergestellt sind.

## Claims

1. Oral palatal distractor (D) comprising a distraction spindle (4) with an external thread that has at least two threaded portions (40, 41), namely a first threaded portion (40) with a lefthand thread (400) and a second threaded portion (41) with a right-hand thread (410), and comprising two distraction bodies (2, 3) which are arranged coaxially with respect to the distraction spindle (4) on said threaded portions (40, 41), namely a first distraction body (2) on the first threaded portion (40) and a second distraction body (3) on the second threaded portion (410), and which each have an internal thread (310) corresponding to the external thread of the threaded portion on which they are arranged and meshing with the external thread (410) of the threaded portion (41), such that, when the distraction spindle (4) is turned, the two distraction bodies (2, 3) can move in opposite directions along the distraction spindle (4) without turning as they move, and comprising a drive element (7) that meshes with the distraction spindle (4) and has an engagement area (72) designed in such a way that, through a continuous movement of an associated adjusting tool, the distraction bodies (2, 3) can be moved between a first end position, in which the two distraction bodies (2, 3) are at a maximum distance from each other, and a second end position, in which the two distraction bodies (2, 3) are at a minimum distance from each other, the distraction bodies (2, 3) each having a fixation tip (20, 30) that points axially outwards from the distractor and is provided with means (21, 31) for transmitting the distraction force in a substantially axial direction to the respective palate half, **characterized in that** each of the distraction bodies (2, 3) has a securing member (5, 6) connected thereto, which securing member (5, 6) protrudes substantially radially from the distraction body (2, 3) and has at least one through-hole (50) through which a fastening element, e.g. a bone screw, can be introduced into the palate.

2. Palatal distractor according to Claim 1, in which the fixation tip (20, 30) comprises a plurality of flattened areas, for example four flattened areas (300).

3. Palatal distractor according to one of Claims 1 or 2, in which the means for transmitting the distraction force to the respective palate half comprise an annular element (21, 31) mounted tiltably on the distraction body (2, 3) in the proximal direction from the fixation tip (20, 30).

4. Palatal distractor according to Claim 1, in which the through-hole (50) of the securing member (5) is provided with a blocking contour in order to block the fastening element.

5. Palatal distractor according to one of the preceding claims, in which the distraction spindle (4) has, between the two threaded portions (40, 41), an engagement area (42) provided with a toothing (420) that meshes with a corresponding toothing (720) of the drive element (7), wherein the distraction spindle (4) is mounted so as to be immovable in the axial direction.

6. Palatal distractor according to one of the preceding claims, in which the engagement area of the drive element (7) on which the adjusting tool engages has an internal hexagon (70).

7. Palatal distractor according to one of the preceding claims, in which all parts of the distractor (D) are made of a biocompatible material, and at least those parts of the distractor (D) that come into contact with the palate are made of titanium or a titanium alloy.

## Revendications

1. Distracteur palatal oral (D) comprenant une broche de distraction (4) avec un filetage externe, qui présente au moins deux portions filetées (40, 41), une première portion filetée (40) avec un filetage à gauche (400) et une deuxième portion filetée (41) avec un filetage à droite (410), et avec deux corps de distraction (2, 3) qui sont disposés coaxialement à la broche de distraction (4) sur ces portions filetées (40, 41), à savoir un premier corps de distraction (2) sur la première portion filetée (40) et un deuxième corps de distraction (3) sur la deuxième portion filetée (410), et qui présentent à chaque fois un filetage interne (310) correspondant au filetage externe de la portion filetée sur laquelle ils sont disposés, lequel filetage interne est en prise avec le filetage externe (410) de la portion filetée (41), les deux corps de distraction (2, 3) pouvant être déplacés dans une direction opposée le long de la broche de distraction (4) lors de la rotation de la broche de distraction (4), sans tourner au cours de leur déplacement, et comprenant en outre un élément d'entraînement (7), qui est en prise avec la broche de distraction (4) et qui présente une région d'engagement (72) qui est réalisée de telle sorte qu'un déplacement du corps de distraction (2, 3) entre une première position d'extrémité dans laquelle les deux corps de distraction (2, 3) sont espacés d'une distance maximale l'un de l'autre, et une deuxième position d'extrémité, dans laquelle les deux corps de distraction (2, 3) sont espacés d'une distance minimale l'un de l'autre, soit possible, avec un outil de réglage associé avec un mouvement continu de l'outil de réglage, les corps de distraction (2, 3) présentant chacun une pointe de fixation (20, 30) tournée à l'opposé du distracteur vers l'extérieur dans la direction axiale, laquelle est pourvue de moyens (21, 31) pour transférer la force de distraction essentiellement dans la direction axiale à la moitié respective du palais, **caractérisé en ce que** chacun des corps de distraction (2, 3) présente un organe de fixation (5, 6) qui lui est connecté, qui fait saillie essentiellement radialement depuis le corps de distraction (2, 3) et dans lequel est prévu au moins un trou de passage (50), à travers lequel un élément de fixation, par exemple une vis à os, peut être introduit dans le palais.

2. Distracteur palatal selon la revendication 1, dans lequel la pointe de fixation (20, 30) présente une pluralité de régions aplaties, par exemple quatre régions aplaties (300).

3. Distracteur palatal selon la revendication 1 ou 2, dans lequel les moyens pour transférer la force de distraction à la moitié respective du palais comprennent un élément (21, 31) de forme annulaire monté de manière à pouvoir basculer sur le corps de distraction (2,3) en position proximale par rapport à la pointe de fixation (20, 30).

4. Distracteur palatal selon la revendication 1, dans lequel un contour de blocage est prévu dans le trou de passage (50) de l'organe de fixation (5), pour bloquer l'élément de fixation.

5. Distracteur palatal selon l'une quelconque des revendications précédentes, dans lequel la broche de distraction (4) présente, entre les deux portions filetées (40, 41), une région d'engagement (42) qui est pourvue d'une denture (420) qui est en prise avec une denture correspondante (720) de l'élément d'entraînement (7), la broche de distraction (4) étant montée de manière immobile dans la direction axiale.

6. Distracteur palatal selon l'une quelconque des revendications précédentes, dans lequel la région d'engagement de l'élément d'entraînement (7), sur laquelle vient en prise l'outil de réglage, présente un embout à six pans creux (70).

7. Distracteur palatal selon l'une quelconque des revendications précédentes, dans lequel toutes les parties du distracteur (D) se composent d'un matériau biocompatible, au moins les parties du distracteur (D) qui viennent en contact avec le palais étant fabriquées en titane ou en un alliage de titane.
